# EUROPEAN PATENT APPLICATION

(11) **EP 4 616 984 A1**
(43) Date of publication of application: **17.09.2025**
(21) Application number: 24162835.3
(22) Date of filing: 12.03.2024
(51) Int. Cl.: B23C 5/06, B23C 5/22

(54) **DOUBLE-SIDED NEGATIVE CUTTING INSERT AND MILLING TOOL**

(71) Applicant: Seco Tools AB, 737 82 Fagersta (SE)
(72) Inventor: MICHELET, Benjamin, 737 82 Fagersta (SE); KARONEN, Matti, 737 82 Fagersta (SE)
(74) Representative: Sandvik

(57) **Abstract**

A double-sided negative cutting insert for use in milling with eight working positions. A peripheral surface extends around the cutting insert (1) and has four main side faces including first and second main side faces (11a, 11b) arranged opposite to each other on opposite sides of the cutting insert and third and fourth main side faces (11c, 11d) arranged opposite to each other on two other opposite sides of the cutting insert. The cutting insert has eight sets of cutting edges, each of which including a main cutting edge, a corner cutting edge and a minor cutting edge. Two flat side surfaces (14a-14d) that are inclined towards each other are provided on each one of the first and second main side faces. The main cutting edges (21a-21h) are arranged along a respective one of said side surfaces on the first and second main side faces and all minor cutting edges (22a-22h) are arranged along the third and fourth main side faces.

## Description

### FIELD OF THE INVENTION AND PRIOR ART

The present invention relates to a double-sided negative cutting insert for milling according to the preamble of claim 1. The invention also relates to a milling tool comprising such a double-sided negative cutting insert.

A milling tool is a rotating cutting tool, which may be provided with one or more cutting inserts detachably mounted in a respective insert seat in a tool body of the milling tool. One type of cutting insert that may be used in a milling tool is a double-sided negative cutting insert with eight different working positions. A cutting insert of this type is previously known from US 9 623 495 B2 and is turnable into eight different working positions, wherein four working positions are provided by four different sets of cutting edges formed at an interface between a peripheral surface and a first major face of the cutting insert and four further working positions are provided by four other different sets of cutting edges formed at an interface between the peripheral surface and a second major face of the cutting insert. When a cutting edge included in one such set of cutting edges has been worn out, the cutting insert may be repositioned in its insert seat and mounted in a new working position with another one of the different sets of cutting edges in an active cutting position. All the cutting edges of the cutting insert disclosed in US 9 623 495 B2 are designed as right-hand cutting edges, which implies that this cutting insert is only to be mounted in a right-hand insert seat.

In this description, an insert seat designed for receiving a cutting insert with a set of right-hand cutting edges of the cutting insert in an active cutting position is referred to as a right-hand insert seat, whereas an insert seat designed for receiving a cutting insert with a set of left-hand cutting edges of the cutting insert in an active cutting position is referred to as a left-hand insert seat.

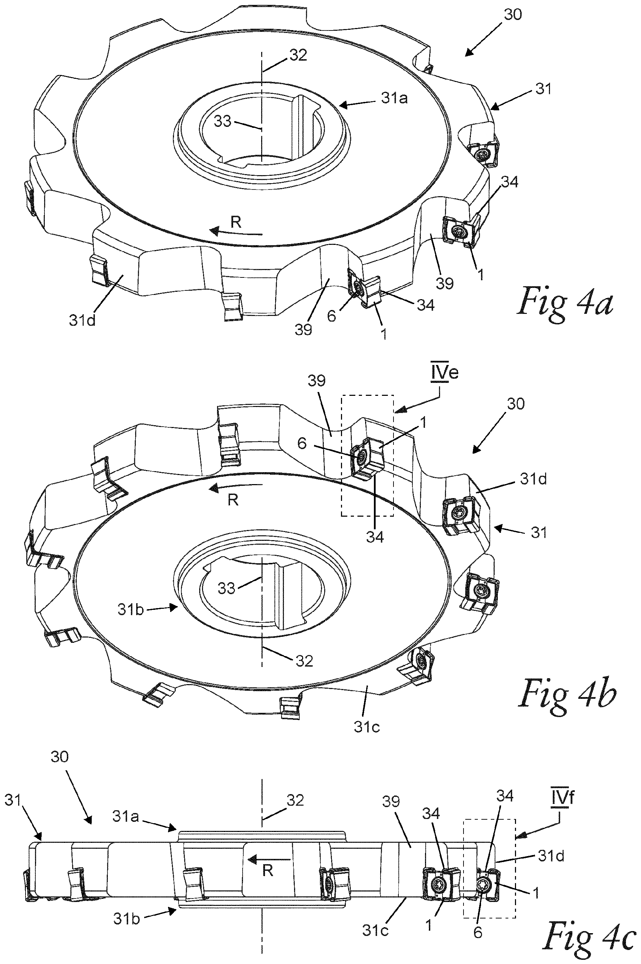

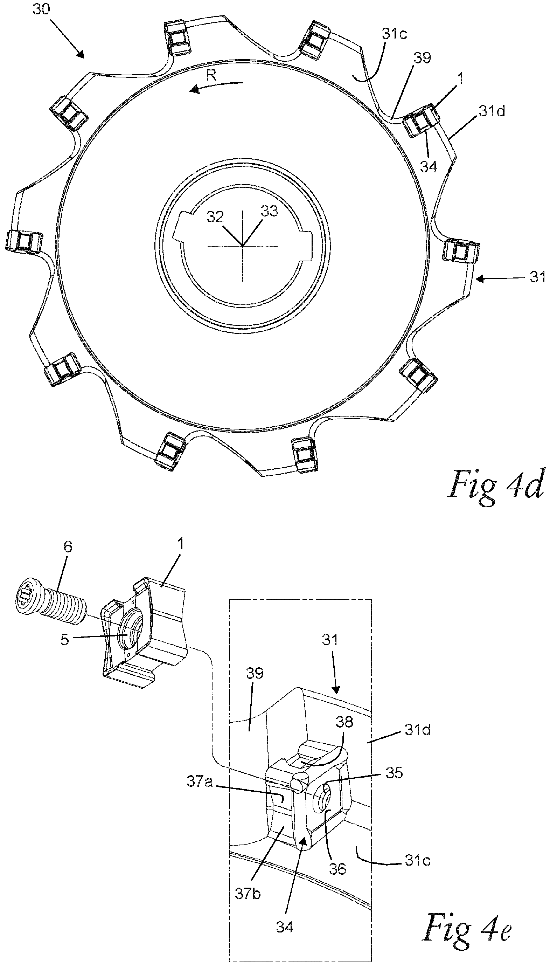

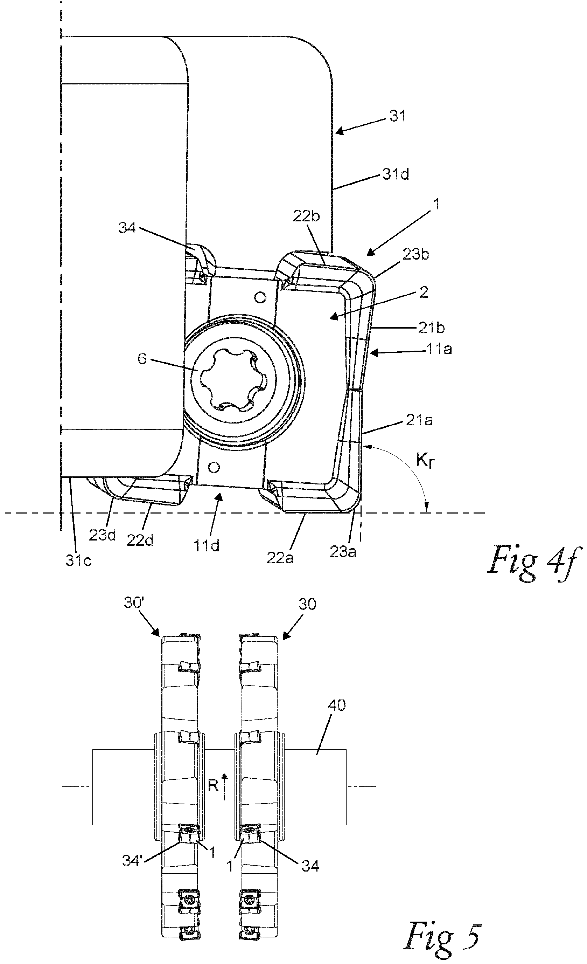

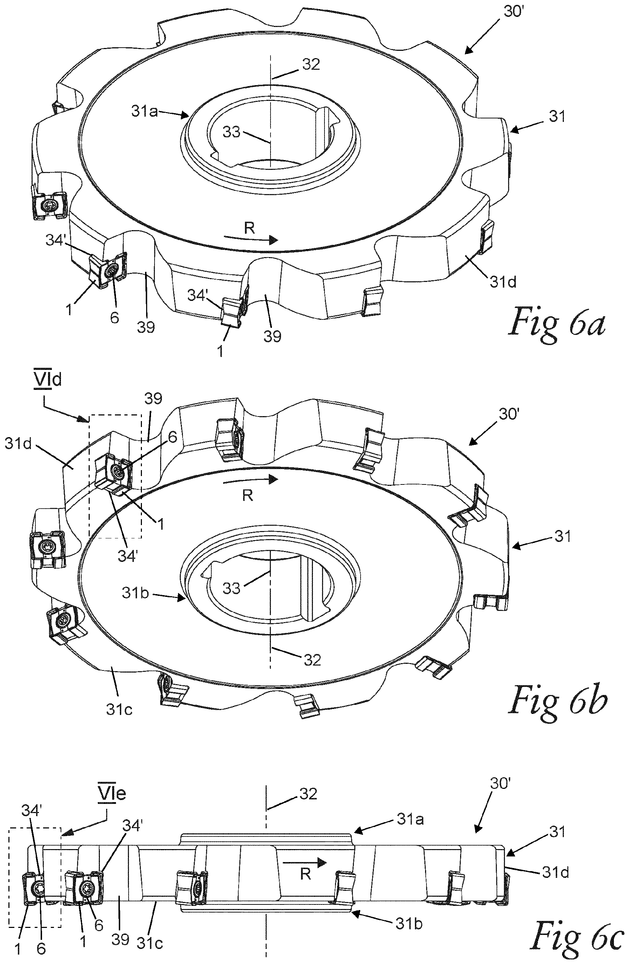

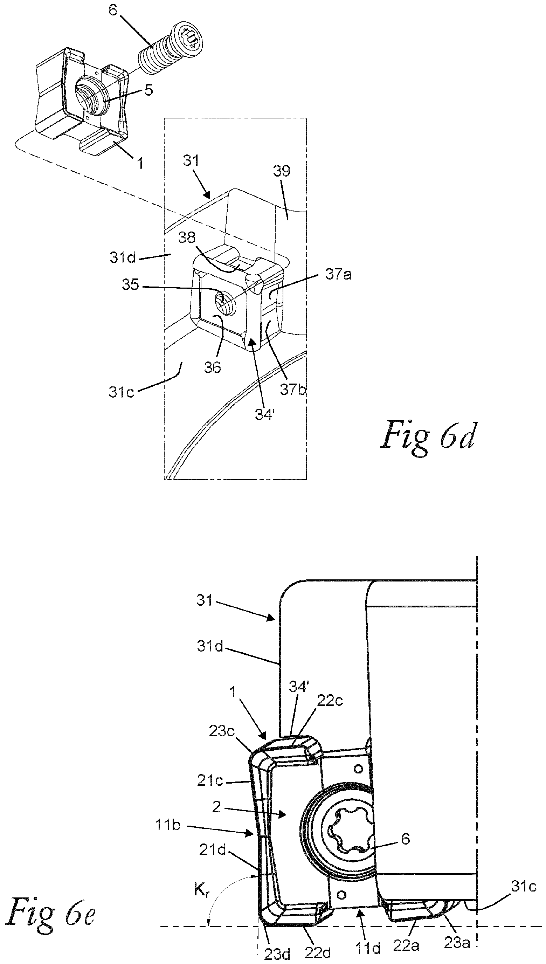

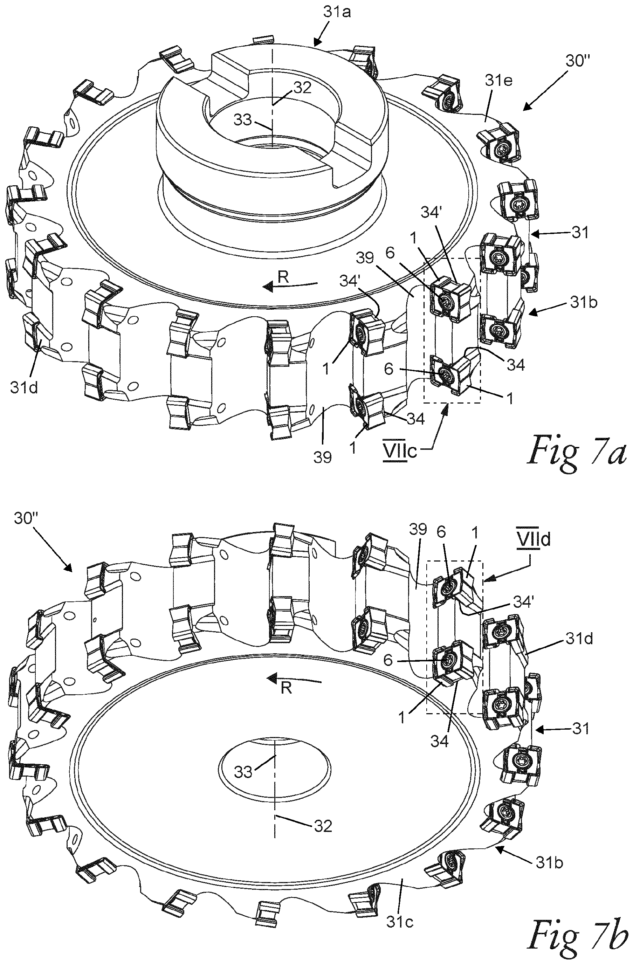

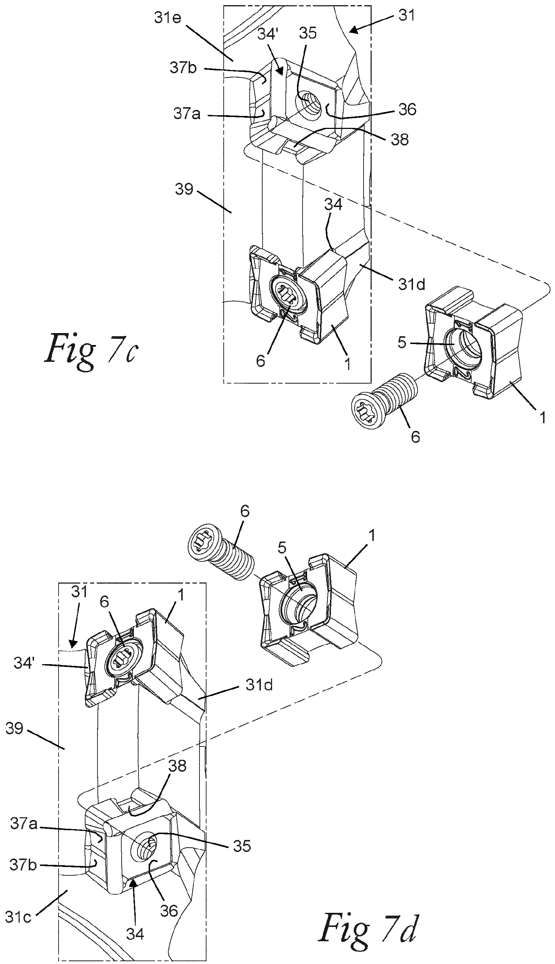

In some types of milling operations, there is a need to use right-hand cutting edges as well as well as left-hand cutting edges, for instance when a half-side and front-face disc milling cutter of the type illustrated in Fig 4a with right-hand insert seats and a half-side and front-face disc milling cutter of the type illustrated in Fig 6a with left-hand insert seats are combined with each other and mounted on the same arbor, as schematically illustrated in Fig 5, in order to perform straddle milling. This is also the case when using a double half-side and face disc milling cutter of the type illustrated in Fig 7a where right-hand cutting edges are to be used on cutting inserts mounted in right-hand insert seats provided at a front face of the milling tool and left-hand cutting edges are to be used on cutting inserts mounted in left-hand insert seats provided at a rear face of the milling tool. If a cutting insert is erroneously mounted with a set of right-hand cutting edges in an active cutting position in a left-hand insert seat, or vice versa, there will be detrimental tool failure.

A double-sided negative cutting insert of the above-mentioned type offers a large number of different working positions and may be produced in a comparatively simple and cost-efficient manner. Since the cutting insert has a negative shape, the cutting insert has to be given a negative axial tipping-in angle and a negative radial tipping-in angle when mounted in an insert seat in a tool body of a milling tool, which implies that the cutting insert has to be tipped in axially forwardly and radially outwardly in the tool body to get a clearance. The negative axial tipping-in angle is necessary in order to create relief behind the active surface-wiping cutting edge and the negative radial tipping-in angle is necessary in order to create relief behind the active main cutting edge. As a consequence of the negative axial tipping-in angle, the cutting process is heavier as it is more difficult for the cutting insert to cut as compared to a corresponding cutting process performed with a cutting insert having a positive axial tipping-in angle. To counteract the negative effect of the axial tipping-in angle, each main cutting edge may be given a downward slope in a direction away from the adjacent corner cutting edge.

### OBJECT OF THE INVENTION

The object of the present invention is to provide a double-sided negative cutting insert of the above-mentioned type that has a new and favourable design.

### SUMMARY OF THE INVENTION

According to the invention, said object is achieved by means of a double-sided negative cutting insert having the features defined in claim 1.

The double-sided negative cutting insert according to the invention is turnable into eight different working positions and comprises:
- a first major face and a second major face arranged opposite to each other on opposite sides of the cutting insert, the first and second major faces being configured to serve as rake faces, one at a time, and to constitute leading and trailing faces of the cutting insert when mounted in an insert seat of a tool body and as seen in an intended direction of rotation of the tool body, wherein the cutting insert has a through hole that extends centrally through the cutting insert between the first and second major faces and a first median plane that extends halfway between the first and second major faces perpendicularly to a centre axis of the through hole;
- a peripheral surface extending around the cutting insert between the first and second major faces and comprising:
   - a first main side face and a second main side face arranged opposite to each other on opposite sides of the cutting insert, wherein the cutting insert has a second median plane that extends halfway between the first and second main side faces and contains the centre axis of the through hole,
   - a third main side face and a fourth main side face arranged opposite to each other on two other opposite sides of the cutting insert, wherein the cutting insert has a third median plane that extends halfway between the third and fourth main side faces and contains the centre axis of the through hole,
   - a first corner side face arranged between the first and fourth main side faces,
   - a second corner side face arranged between the first and third main side faces,
   - a third corner side face arranged between the second and third main side faces, and
   - a fourth corner side face arranged between the second and fourth main side faces;
- a curved first corner cutting edge formed at an intersection between the first corner side face and the first major face;
- a curved second corner cutting edge formed at an intersection between the second corner side face and the first major face;
- a curved third corner cutting edge formed at an intersection between the third corner side face and the first major face;
- a curved fourth corner cutting edge formed at an intersection between the fourth corner side face and the first major face;
- a curved fifth corner cutting edge formed at an intersection between the first corner side face and the second major face;
- a curved sixth corner cutting edge formed at an intersection between the second corner side face and the second major face;
- a curved seventh corner cutting edge formed at an intersection between the third corner side face and the second major face; and
- a curved eighth corner cutting edge formed at an intersection between the fourth corner side face and the second major face.

The first main side face comprises a first side surface and a second side surface located on opposite sides of the third median plane, the first side surface extending between the first and second major faces and adjoining to the first corner side face, and the second side surface extending between the first and second major faces and adjoining to the second corner side face. In a corresponding manner, the second main side face comprises a third side surface and a fourth side surface located on opposite sides of the third median plane, the third side surface extending between the first and second major faces and adjoining to the third corner side face, and the fourth side surface extending between the first and second major faces and adjoining to the fourth corner side face.

The third main side face comprises a fifth side surface and a sixth side surface located on opposite sides of the second median plane, the fifth side surface extending between the first and second major faces and adjoining to the second corner side face, and the sixth side surface extending between the first and second major faces and adjoining to the third corner side face. In the corresponding manner, the fourth main side face comprises a seventh side surface and an eighth side surface located on opposite sides of the second median plane, the seventh side surface extending between the first and second major faces and adjoining to the fourth corner side face, and the eighth side surface extending between the first and second major faces and adjoining to the first corner side face.

Owing to the fact that the cutting insert is a negative cutting insert, the peripheral surface extends between the first and second major faces perpendicularly to the above-mentioned first median plane, which implies that each one of the above-mentioned first, second, third, fourth, fifth, sixth, seventh and eighth side surfaces included in the peripheral surface is perpendicular to the first median plane.

The cutting insert according to the invention further comprises:
- a first main cutting edge formed at an intersection between the first side surface and the first major face and a first minor cutting edge formed at an intersection between the eighth side surface and the first major face, wherein the first minor cutting edge, the first corner cutting edge and the first main cutting edge form a first set of cutting edges and are located in series with each other with the first corner cutting edge located between the first main cutting edge and the first minor cutting edge;
- a second main cutting edge formed at an intersection between the second side surface and the first major face and a second minor cutting edge formed at an intersection between the fifth side surface and the first major face, wherein the second minor cutting edge, the second corner cutting edge and the second main cutting edge form a second set of cutting edges and are located in series with each other with the second corner cutting edge located between the second main cutting edge and the second minor cutting edge;

- a third main cutting edge formed at an intersection between the third side surface and the first major face and a third minor cutting edge formed at an intersection between the sixth side surface and the first major face, wherein the third minor cutting edge, the third corner cutting edge and the third main cutting edge form a third set of cutting edges and are located in series with each other with the third corner cutting edge located between the third main cutting edge and the third minor cutting edge;
- a fourth main cutting edge formed at an intersection between the fourth side surface and the first major face and a fourth minor cutting edge formed at an intersection between the seventh side surface and the first major face, wherein the fourth minor cutting edge, the fourth corner cutting edge and the fourth main cutting edge form a fourth set of cutting edges and are located in series with each other with the fourth corner cutting edge located between the fourth main cutting edge and the fourth minor cutting edge;
- a fifth main cutting edge formed at an intersection between the first side surface and the second major face and a fifth minor cutting edge formed at an intersection between the eighth side surface and the second major face, wherein the fifth minor cutting edge, the fifth corner cutting edge and the fifth main cutting edge form a fifth set of cutting edges and are located in series with each other with the fifth corner cutting edge located between the fifth main cutting edge and the fifth minor cutting edge;
- a sixth main cutting edge formed at an intersection between the second side surface and the second major face and a sixth minor cutting edge formed at an intersection between the fifth side surface and the second major face, wherein the sixth minor cutting edge, the sixth corner cutting edge and the sixth main cutting edge form a sixth set of cutting edges and are located in series with each other with the sixth corner cutting edge located between the sixth main cutting edge and the sixth minor cutting edge;
- a seventh main cutting edge formed at an intersection between the third side surface and the second major face and a seventh minor cutting edge formed at an intersection between the sixth side surface and the second major face, wherein the seventh minor cutting edge, the seventh corner cutting edge and the seventh main cutting edge form a seventh set of cutting edges and are located in series with each other with the seventh corner cutting edge located between the seventh main cutting edge and the seventh minor cutting edge; and
- an eighth main cutting edge formed at an intersection between the fourth side surface and the second major face and an eighth minor cutting edge formed at an intersection between the seventh side surface and the second major face, wherein the eighth minor cutting edge, the eighth corner cutting edge and the eighth main cutting edge form an eighth set of cutting edges and are located in series with each other with the eighth corner cutting edge located between the eighth main cutting edge and the eighth minor cutting edge.

Each one of said main cutting edges has a first end facing the adjacent corner cutting edge and an opposite second end facing the third median plane, wherein each one of said main cutting edges is inclined in relation to the first median plane such that its first end is located further away from the first median plane than its second end. Thus, the main cutting edge in each set of cutting edges has a downward slope in a direction away from the adjacent corner cutting edge in the same set of cutting edges, which counteracts the negative effect of the axial tipping-in angle required for a double-sided negative cutting insert.

The first side surface is substantially flat and extends in a first plane and the second side surface is substantially flat and extends in a second plane, wherein the first and second side surfaces are inclined towards each other at the same angle to the second median plane and such that said first and second planes form an angle with each other that is larger than or equal to 90° and smaller than 180°. In the corresponding manner, the third side surface is substantially flat and extends in a third plane and the fourth side surface is substantially flat and extends in a fourth plane, wherein the third and fourth side surfaces are inclined towards each other at the same angle to the second median plane and such that said third and fourth planes form an angle with each other that is equal to the angle that said first and second planes form with each other.

The double-sided negative cutting insert of the present invention offers a large number of different working positions and may be produced in a comparatively simple and cost-efficient manner. By a suitable inclination of the first, second, third and fourth side surfaces with due account of the above-mentioned downward slope of the main cutting edges, it is possible to achieve an entering angle that is 90° or at least very close to 90° in each working position of the cutting insert.

When the double-sided negative cutting insert is mounted in an insert seat with one of the main cutting edges in an active cutting position, the minor cutting edge in the same set of cutting edges is intended to be in an active surface wiping position. Thus, the minor cutting edges are intended to function as surface-wiping cutting edges in a respective one of the eighth working positions of the cutting insert. By having all eight main cutting edges arranged along the mutually opposite first and second main side faces and all eight minor cutting edges arranged along the mutually opposite third and fourth main side faces, the cutting edges included in four of the available eight sets of cutting edges will constitute right-hand cutting edges and the cutting edges included in the other four sets of cutting edges will constitute left-hand cutting edges, and the different sets of cutting edges will be so positioned on the cutting insert that one of the four sets of cutting edges with right-hand cutting edges will always be in an active cutting position when the cutting insert is mounted in a right-hand insert seat and one of the four sets of cutting edges with left-hand cutting edges will always be in an active cutting position when the cutting insert is mounted in a left-hand insert seat. Thus, with this cutting insert, there is no risk of erroneously mounting the cutting insert in a left-hand insert seat with a set of right-hand cutting edges in an active cutting position or in a right-hand insert seat with a set of left-hand cutting edges in an active cutting position. Consequently, the cutting insert of the present invention is suitable for use in a milling tool for straddle milling of the type illustrated in Fig 5 and in a double half-side and face disc milling cutter of the type illustrated in Fig 7a.

The above-mentioned through hole that extends between the first and second major faces is configured to receive a fastening element, for instance in the form of a screw, by means of which the cutting insert may be releasably fixed to an insert seat in a tool body of a milling tool. In each working position of the cutting insert, at least one surface on one of the first and second major faces is configured to serve as a tangential abutment surface of the cutting insert and abut against a corresponding tangential support surface in an insert seat in a tool body, at least one surface on one of the first and second main side faces is configured to serve as a radial abutment surface of the cutting insert and abut against a corresponding radial support surface in said insert seat and at least one surface on one of the third and fourth main side faces is configured to serve as an axial abutment surface of the cutting insert and abut against a corresponding axial support surface in said insert seat. The inclined first and second side surfaces on the first main side face are preferably configured to jointly serve as radial abutment surfaces of the cutting insert in four of the eighth possible working positions of the cutting insert, wherein the inclined third and fourth side surfaces on the second main side face are configured to jointly serve as radial abutment surfaces of the cutting insert in the other four working positions of the cutting insert. However, the first, second, third and fourth side surfaces may as an alternative be configured to serve as radial abutment surfaces of the cutting insert one at a time in different working positions of the cutting insert.

According to an embodiment of the invention, each one of said main cutting edges has such an inclination in relation to the first median plane that an imaginary straight reference line that extends between a first end point of the main cutting edge at the first end thereof and a second end point of the main cutting edge at the second end thereof forms an angle of 1-30°, preferably 5-15°, with the first median plane. The angle should be at least 1° to have a positive slope. An angle larger than 30° is less suitable and may result in pulling axial cutting forces. However, this angle may be larger than 30° if so desired. It is preferred that this angle is 5-15°. If the angle is 5° or larger, the effect is more noticeable. An angle larger than 15° may result in larger form errors during a sintering of the cutting insert.

Another embodiment of the invention is characterized in:
- that the first and second main cutting edges are mirror symmetrical to each other with respect to the third median plane;
- that the third and fourth main cutting edges are mirror symmetrical to each other with respect to the third median plane;
- that the fifth and sixth main cutting edges are mirror symmetrical to each other with respect to the third median plane; and
- that the seventh and eighth main cutting edges are mirror symmetrical to each other with respect to the third median plane.

According to another embodiment of the invention, the angle that said first and second planes form with each other is larger than or equal to 140° and smaller than 180°, preferably larger than or equal to 160° and smaller than 180°. When this angle is at least 140°, the cutting insert may be given a slim design. When this angle is at least 160°, the risk for chip erosion of the inactive main cutting edge located above the active main cutting edge in the prevailing working position of the cutting insert is decreased.

Another embodiment of the invention is characterized in:
- that each side surface of said fifth, sixth, seventh and eighth side surfaces is substantially flat or is convexly curved as seen in any plane that is parallel to the first median plane and extends across the side surface in question;
- that the fifth side surface has a first lateral edge, through which the fifth side surface adjoins to the second corner side face and which extends in a straight line from the first major face to the second major face in parallel with the centre axis of the through hole, and an opposite second lateral edge that is parallel to said first lateral edge and extends in a straight line from the first major face to the second major face;
- that the sixth side surface has a first lateral edge, through which the sixth side surface adjoins to the third corner side face and which extends in a straight line from the first major face to the second major face in parallel with the centre axis of the through hole, and an opposite second lateral edge that is parallel to said first lateral edge and extends in a straight line from the first major face to the second major face;
- that the seventh side surface has a first lateral edge, through which the seventh side surface adjoins to the fourth corner side face and which extends in a straight line from the first major face to the second major face in parallel with the centre axis of the through hole, and an opposite second lateral edge that is parallel to said first lateral edge and extends in a straight line from the first major face to the second major face; and
- that the eighth side surface has a first lateral edge, through which the eighth side surface adjoins to the first corner side face and which extends in a straight line from the first major face to the second major face in parallel with the centre axis of the through hole, and an opposite second lateral edge that is parallel to said first lateral edge and extends in a straight line from the first major face to the second major face.
Each one of the fifth and sixth side surfaces may through its second lateral edge adjoin to a respective adjacent surface on the third main side face that is convexly curved as seen in any plane that is parallel to the first median plane. In the corresponding manner, each one of the seventh and eighth side surfaces may through its second lateral edge adjoin to a respective adjacent surface on the fourth main side face that is convexly curved as seen in any plane that is parallel to the first median plane. Each one of said convexly curved surfaces on the third and fourth main side faces preferably has a radius of curvature that is smaller than or equal to 10 mm, as seen in any plane that is parallel to the first median plane. A suitable radius of curvature of these convexly curved surfaces on the third and fourth main side faces may furthermore or as an alternative be defined in relation to a radius of curvature of the corner side faces. In the latter case, each convexly curved surface that adjoins to one of the fifth, sixth, seventh and eighth side surfaces through the second lateral edge of the side surface in question preferably has a radius of curvature that is smaller than the radius of curvature of the adjacent corner side face to which the side surface in question adjoins through its first lateral edge. In this way, each one of the minor cutting edges may be given a suitable length and each one of the corner cutting edges may be given a suitable radius of curvature.

In the case when said fifth, sixth, seventh and eighth side surfaces are convexly curved, each one of these side surfaces is suitably convexly curved with a radius of curvature of 30-1000 mm as seen in any plane that is parallel to the first median plane and extends across the side surface in question. Hereby, a good surface finish of the milled workpiece may be achieved. When the radius of curvature is less than 30 mm, the surface finish may be inferior. When the radius of curvature is more than 1000 mm, the surface finish of the milled workpiece may be inferior if the insert seat and the cutting insert have large manufacturing tolerances. Preferably, said radius of curvature is 50-500 mm, more preferably 50-300 mm, as seen in any plane that is parallel to the first median plane and extends across the side surface in question. More improved surface finish is achieved when the radius of curvature is 50-500 mm even though sintering errors are present. When the radius of curvature is 50-300 mm, good performance is observed and the milling tool has less vibration tendencies.

Another embodiment of the invention is characterized in:
- that the second side surface has such an inclination in relation to the fifth side surface that said second plane forms an angle of 87-93° with a fifth plane that contains the first and second lateral edges of the fifth side surface;
- that the third side surface has such an inclination in relation to the sixth side surface that said third plane forms an angle with a sixth plane, which contains the first and second lateral edges of the sixth side surface, that is equal to the angle that said second plane forms with said fifth plane;
- that the fourth side surface has such an inclination in relation to the seventh side surface that said fourth plane forms an angle with a seventh plane, which contains the first and second lateral edges of the seventh side surface, that is equal to the angle that said second plane forms with said fifth plane; and
- that the first side surface has such an inclination in relation to the eighth side surface that said first plane forms an angle with an eighth plane, which contains the first and second lateral edges of the eighth side surface, that is equal to the angle that said second plane forms with said fifth plane.
When said angle is 87-93°, the insert seat can have more advantageous tipping-in angles gaining good cutting properties at the same time as an entering angle of 90° or close to 90° can be achieved.

According to another embodiment of the invention, the fifth and sixth side surfaces are inclined away from each other at the same angle to the third median plane and such that said fifth and sixth planes form an angle with each other that is smaller than 180°, wherein the seventh and eighth side surfaces are inclined away from each other at the same angle to the third median plane and such that said seventh and eighth planes form an angle with each other that is equal to the angle that said fifth and sixth planes form with each other. When the cutting insert is in a working position in an insert seat in a tool body with one of the minor cutting edges in an active surface wiping position, an inactive minor cutting edge adjacent to and on the same major face as the active minor cutting edge will be moved closely above a machined workpiece surface that is levelled by the active minor cutting edge. There has to be a proper clearance between said inactive minor cutting edge and the workpiece surface in order to prevent small fragments of workpiece material from getting stuck between the inactive minor cutting edge and the workpiece surface and thereby subject the inactive minor cutting edge to small damages. This clearance is improved by said mutual inclination between the fifth and sixth side surfaces and between the seventh and eighth side surfaces, respectively, which will reduce the risk of damages to said inactive minor cutting edge.

Each one of the first and second main side faces preferably has 180° rotational symmetry about a first imaginary reference axis that extends along a line of intersection between the first median plane and the third median plane. In this context, each one of the first and second main side faces is considered to have 180° rotational symmetry about the first imaginary reference axis even if any of these main side faces is provided with one or more minor markings, for instance in the form of recesses, that lack 180° rotational symmetry about the first imaginary reference axis, on condition that these one or more markings have no relevance for the functioning of the cutting insert.

Each one of the third and fourth main side faces preferably has 180° rotational symmetry about a second imaginary reference axis that extends along a line of intersection between the first median plane and the second median plane. In this context, each one of the third and fourth main side faces is considered to have 180° rotational symmetry about the second imaginary reference axis even if any of these main side faces is provided with one or more minor markings, for instance in the form of recesses, that lack 180° rotational symmetry about the second imaginary reference axis, on condition that these one or more markings have no relevance for the functioning of the cutting insert.

Each one of the first and second major faces preferably has 180° rotational symmetry about the centre axis of the through hole. In this context, each one of the first and second major faces is considered to have 180° rotational symmetry about the centre axis of the through hole even if any of these major faces is provided with one or more minor markings, for instance in the form of recesses, that lack 180° rotational symmetry about the centre axis of the through hole, on condition that these one or more markings have no relevance for the functioning of the cutting insert.

The first and second major faces are preferably mirror symmetrical to each other with respect to the first median plane. In this context, the first and second major faces are considered to be mirror symmetrical to each other with respect to the first median plane even if there are one or more minor markings, for instance in the form of recesses, on any of these major faces that are not mirror symmetrical with respect to the first median plane, on condition that these one or more markings have no relevance for the functioning of the cutting insert.

Another embodiment of the invention is characterized in:
- that the first major face comprises a substantially flat first tangential abutment surface, wherein the first, second, third and fourth corner cutting edges are all located further away from the first median plane than the first tangential abutment surface; and
- that the second major face comprises a substantially flat second tangential abutment surface, wherein the fifth, sixth, seventh and eighth corner cutting edges are all located further away from the first median plane than the second tangential abutment surface.
The first tangential abutment surface on the first major face is configured to serve as tangential abutment surface of the cutting insert and abut against a corresponding tangential support surface in an insert seat in a tool body in four of the eight possible working positions of the cutting insert, and the second tangential abutment surface on the second major face is configured to serve as tangential abutment surface of the cutting insert and abut against a corresponding tangential support surface in an insert seat in a tool body in the other four working positions of the cutting insert.

Another embodiment of the invention is characterized in:
- that also the first, second, third and fourth main cutting edges and the first, second, third and fourth minor cutting edges are all located further away from the first median plane than the first tangential abutment surface; and
- that also the fifth, sixth, seventh and eighth main cutting edges and the fifth, sixth, seventh and eighth minor cutting edges are all located further away from the first median plane than the second tangential abutment surface.

Another embodiment of the invention is characterized in:
- that the fifth and sixth side surfaces are separated from each other by a first groove provided on the third main side face between the fifth side surface and the sixth side surface, wherein this first groove extends from the first major face to the second major face; and
- that the seventh and eighth side surfaces are separated from each other by a second groove provided on the fourth main side face between the seventh side surface and the eighth side surface, wherein this second groove extends from the first major face to the second major face.
Thus, the first groove forms an interspace between the fifth and sixth side surfaces on the third main side face and thereby also an interspace between the second and third minor cutting edges and between the sixth and seventh minor cutting edges, whereas the second groove forms an interspace between the seventh and eighth side surfaces on the fourth main side face and thereby also an interspace between the fourth and first minor cutting edges and between the eighth and fifth minor cutting edges. Thanks to this, the minor cutting edges can be given a length that is most suitable for an application.

According to another embodiment of the invention, each one of the first and second grooves has a substantially flat bottom surface that is parallel to the third median plane and configured to serve as an axial abutment surface of the cutting insert in four of said eight working positions of the cutting insert and abut against a corresponding axial support surface in an insert seat in a tool body when the cutting insert is mounted in the insert seat in any of these four working positions. Thus, the bottom surface of the first groove is configured to serve as axial abutment surface of the cutting insert and abut against a corresponding axial support surface in an insert seat in a tool body in four of the eight possible working positions of the cutting insert, and the bottom surface of the second groove is configured to serve as axial abutment surface of the cutting insert and abut against a corresponding axial support surface in an insert seat in a tool body in the other four working positions of the cutting insert.

Another embodiment of the invention is characterized in:
- that the first and second side surfaces are separated from each other by a first transition area on the first main side face, wherein this first transition area extends between the first and second major faces; and
- that the third and fourth side surfaces are separated from each other by a second transition area on the second main side face, wherein this second transition area extends between the first and second major faces.
Thus, the first transition area forms an interspace between the first and second side surfaces on the first main side face and thereby also an interspace between the first and second main cutting edges and between the fifth and sixth main cutting edges, whereas the second transition area forms an interspace between the third and fourth side surfaces on the second main side face and thereby also an interspace between the third and fourth main cutting edges and between the seventh and eighth main cutting edges. Thanks to this, the cutting insert becomes stronger because the stresses generated during use of the cutting insert are decreased by a presence of the first and second transition areas. Each one of said first and second transition areas is preferably concavely curved as seen in any plane that is parallel to the first median plane and extends across the transition area in question.

Further advantageous features of the double-sided negative cutting insert according to the present invention will appear from the description following below.

The invention also relates to a milling tool comprising at least one double-sided negative cutting insert of the above-mentioned type. This milling tool is preferably a half-side and back-face disc milling cutter, a half-side and front-face disc milling cutter or a double half-side and face disc milling cutter.

Further advantageous features of the milling tool according to the present invention will appear from the description following below.

### BRIEF DESCRIPTION OF THE DRAWINGS

With reference to the appended drawings, a specific description of embodiments of the invention cited as examples follows below. In the drawings:
- Figs 1a and 1b: are perspective views from different directions of a double-sided negative cutting insert according to an embodiment of the present invention,
- Fig 1c: is a plan view from above of the cutting insert of Figs 1a and 1b,
- Fig 1d: is a plan view from below of the cutting insert of Figs 1a and 1b,
- Fig 1e: is a lateral view of the cutting insert of Figs 1a and 1b seen from a first side,
- Fig 1f: is a lateral view of the cutting insert of Figs 1a and 1b seen from an opposite second side,
- Fig 1g: is a front view of the cutting insert of Figs 1a and 1b,
- Fig 1h: is a rear view of the cutting insert of Figs 1a and 1b,
- Fig 2: is a perspective view of a double-sided negative cutting insert according to an alternative embodiment of the invention,
- Fig 3: is a perspective view of a double-sided negative cutting insert according to another alternative embodiment of the invention,
- Figs 4a and 4b: are perspective views from different directions of a milling tool in the form of a half-side and front-face disc milling cutter provided with right-hand insert seats and cutting inserts according to the embodiment illustrated in Figs 1a-1h,
- Fig 4c: is a lateral view of the milling tool of Figs 4a and 4b,
- Fig 4d: is a plan view of the milling tool of Figs 4a and 4b,
- Fig 4e: is a detail enlargement according to the rectangle IVe in Fig 4b, as seen with the cutting insert removed from its insert seat in the tool body of the milling tool,
- Fig 4f: is a detail enlargement according to the rectangle IVf in Fig 4c,
- Fig 5: is a schematic lateral view of a half-side and front-face disc milling cutter of the type illustrated in Figs 4a-4f and a half-side and front-face disc milling cutter of the type illustrated in Figs 6a-6e mounted on the same arbor,
- Figs 6a and 6b: are perspective views from different directions of a milling tool in the form of a half-side and front-face disc milling cutter provided with left-hand insert seats and cutting inserts according to the embodiment illustrated in Figs 1a-1h,
- Fig 6c: is a lateral view of the milling tool of Figs 6a and 6b,
- Fig 6d: is a detail enlargement according to the rectangle VId in Fig 6b, as seen with the cutting insert removed from its insert seat in the tool body of the milling tool,
- Fig 6e: is a detail enlargement according to the rectangle VIe in Fig 6c,
- Figs 7a and 7b: are perspective views from different directions of a milling tool in the form of a double half-side and face disc milling cutter provided cutting inserts according to the embodiment illustrated in Figs 1a-1h,
- Fig 7c: is a detail enlargement according to the rectangle Vllc in Fig 7a, as seen with a cutting insert removed from its insert seat in the tool body of the milling tool, and
- Fig 7d: is a detail enlargement according to the rectangle Vlld in Fig 7b, as seen with a cutting insert removed from its insert seat in the tool body of the milling tool.

### DETAILED DESCRIPTION OF EMBODIMENTS OF THE INVENTION

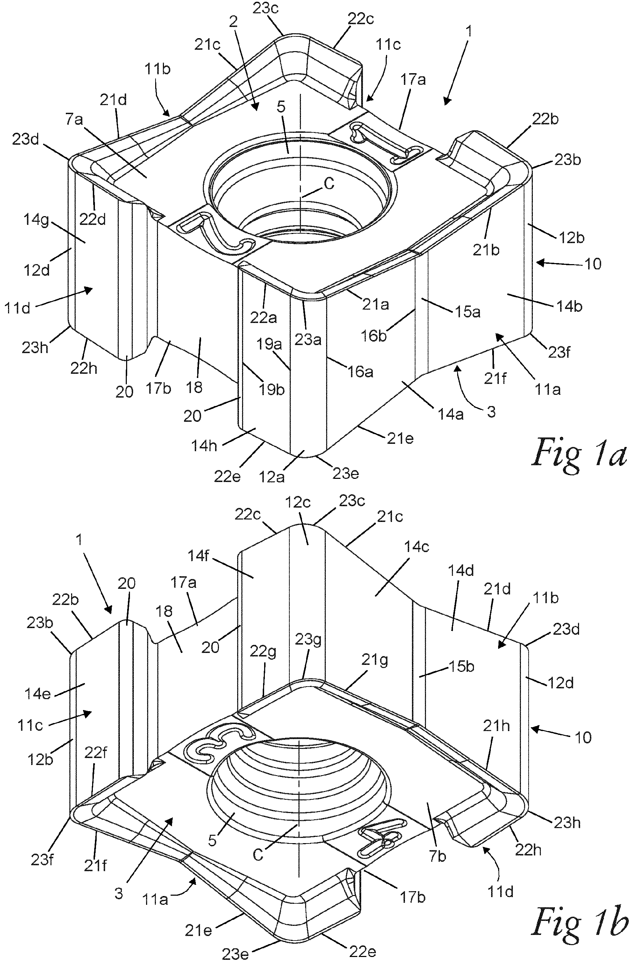

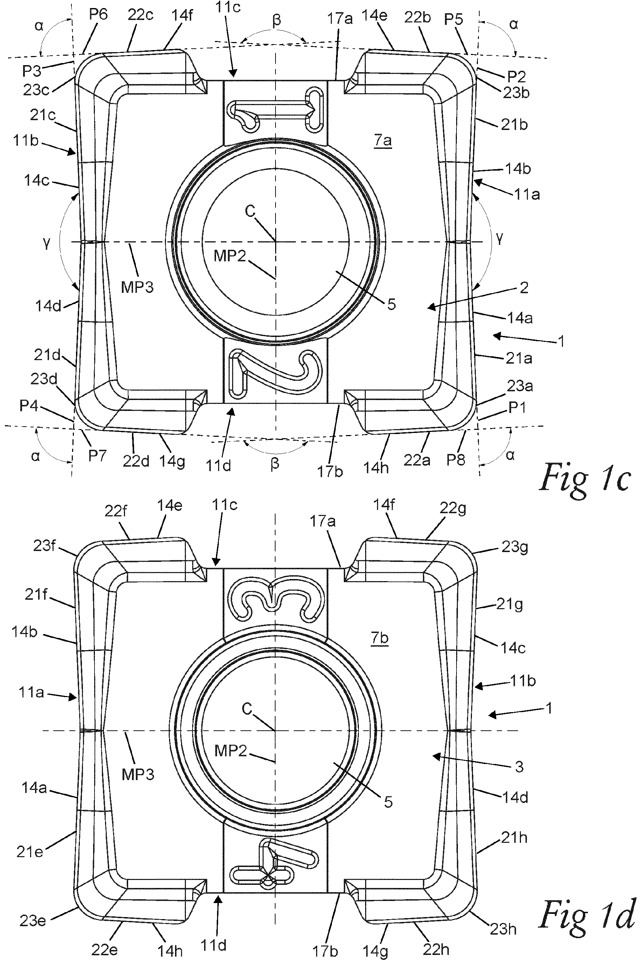

An embodiment of a double-sided negative cutting insert 1 according to the present invention is illustrated in Figs 1a-1h. The cutting insert 1 is configured for use in milling and is configured to be used in a milling tool, for instance in a milling tool of any of the types illustrated in Figs 4a-4f, Figs 6a-6e and Figs 7a-7d.

The cutting insert 1 has an essentially quadrangular basic shape and is turnable into eight different working positions. The cutting insert 1 comprises a first major face 2 and a second major face 3 arranged opposite to each other on opposite sides of the cutting insert. The two major faces 2, 3 are configured to serve as rake faces, one at a time, and are configured to constitute leading and trailing faces of the cutting insert 1 when the cutting insert is mounted in an insert seat 34, 34' of a tool body 31 and as seen in the intended direction of rotation R of the tool body. Thus, the cutting insert 1 is configured to be mounted in an insert seat 34, 34' of the tool body 31 with one of the two major faces 2, 3 facing forward in the intended direction of rotation R of the tool body and serving as rake face and the other major face facing rearward in the intended direction of rotation R of the tool body.

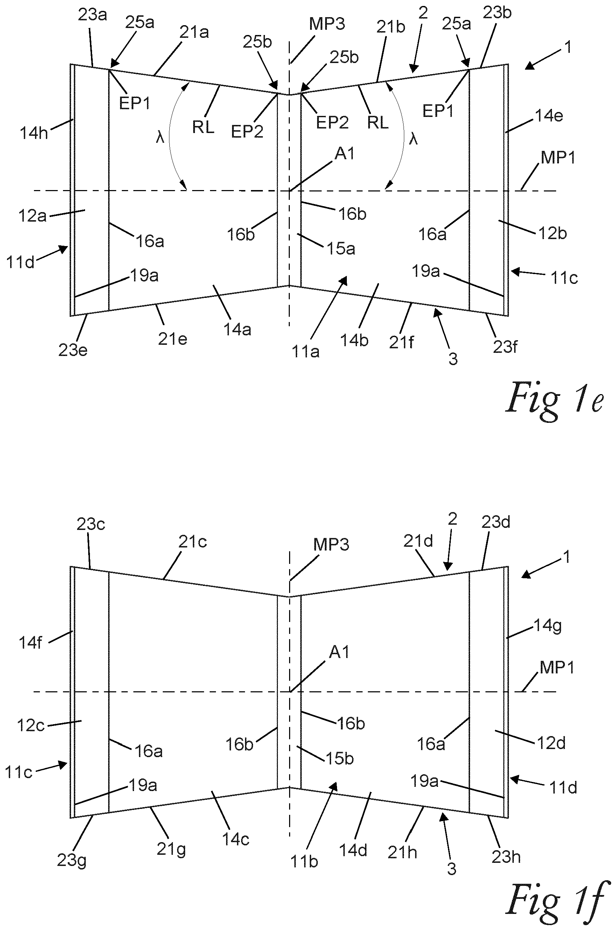

The cutting insert 1 is provided with a through hole 5, which extends centrally through the cutting insert all the way between the first and second major faces 2, 3, i.e. from the first major face 2 to the second major face 3. The through hole 5 is configured to receive a fastening element 6, for instance in the form of a screw, by means of which the cutting insert may be releasably fixed to an insert seat 34, 34' of a milling tool. The through hole 5 has a centre axis C, which coincides with a centre axis of the cutting insert 1. A first median plane MP1 (Figs 1e-1h), which constitutes an imaginary plane, extends halfway between the first and second major faces 2, 3 perpendicularly to the centre axis C of the through hole 5.

A peripheral surface 10 extends around the cutting insert 1 between the first and second major faces 2, 3 perpendicularly to the first median plane MP1. The peripheral surface 10 comprises four main side faces 11a-11d and four corner side faces 12a-12d, wherein each corner side face 12a-12d is located between two adjacent main side faces 11a-11d. The main side faces comprise a first main side face 11a and a second main side face 11b located opposite to each other on two opposite sides of the cutting insert 1. The main side faces further comprise a third main side face 11c and a fourth main side face 11d located opposite to each other on two other opposite sides of the cutting insert. Thus, the first and second main side faces 11a, 11b are located opposite to each other on mutually opposite sides of the through hole 5. In the corresponding manner, the third and fourth main side faces 11c, 11d are located opposite to each other on mutually opposite sides of the through hole 5. In the illustrated embodiment, the first and second main side faces 11a, 11b are, within manufacturing tolerances, identical to each other. In the illustrated embodiment, also the third and fourth main side faces 11c, 11d are, within manufacturing tolerances, identical to each other.

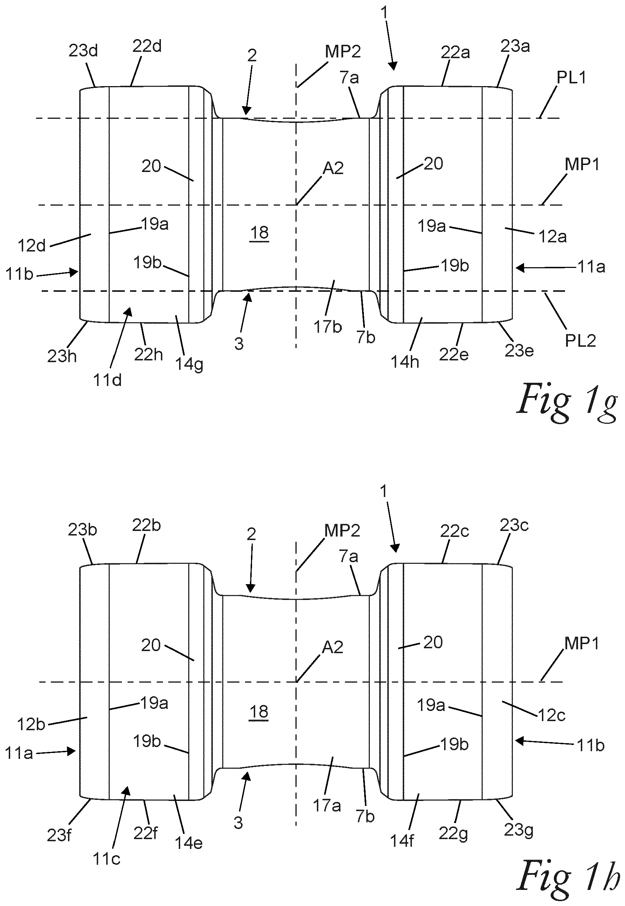

A second median plane MP2, which constitutes an imaginary plane, extends halfway between the first and second main side faces 11a, 11b and contains the centre axis C of the through hole 5. A third median plane MP3, which also constitutes an imaginary plane, extends halfway between the third and fourth main side faces 11c, 11d and contains the centre axis C of the through hole 5. The second and third median planes MP2, MP3 extend perpendicularly to each other and intersect each other along the centre axis C of the through hole 5. Each one of the first and second main side faces 11a, 11b has 180° rotational symmetry about a first imaginary reference axis A1 (see Figs 1e and 1f) that extends along a line of intersection between the first median plane MP1 and the third median plane MP3, and each one of the third and fourth main side faces 11c, 11d has 180° rotational symmetry about a second imaginary reference axis A2 (see Figs 1g and 1h) that extends along a line of intersection between the first median plane MP1 and the second median plane MP2.

The corner side faces comprise:
- a first corner side face 12a arranged between the first main side face 11a and the fourth main side face 11d;
- a second corner side face 12b arranged between the first main side face 11a and the third main side face 11c;
- a third corner side face 12c arranged between the second main side face 11b and the third main side face 11c; and
- a fourth corner side face 12d arranged between the second main side face 11b and the fourth main side face 11d.

Each one of the corner side faces 12a-12d is convexly curved as seen in a cross-section of the cutting insert 1 taken along the first median plane MP1 and as seen in any plane that is parallel to the first median plane MP1 and extends across the corner side face in question.

The first main side face 11a comprises a first side surface 14a and a second side surface 14b located on opposite sides of the third median plane MP3, wherein the first side surface 14a extends from the first major face 2 to the second major face 3 and adjoins to the first corner side face 12a, and wherein the second side surface 14b extends from the first major face 2 to second major face 3 and adjoins to the second corner side face 12b. In the corresponding manner, the second main side face 11b comprises a third side surface 14c and a fourth side surface 14d located on opposite sides of the third median plane MP3, wherein the third side surface 14c extends from the first major face 2 to the second major face 3 and adjoins to the third corner side face 12c, and wherein the fourth side surface 14d extends from the first major face 2 to the second major face 3 and adjoins to the fourth corner side face 12d. In the illustrated embodiment, the first and second side surfaces 14a, 14b are separated from each other by a first transition area 15a on the first main side face 11a, and the third and fourth side surfaces 14c, 14d are separated from each other by a second transition area 15b on the second main side face 11b, wherein each one of the first and second transition areas 15a, 15b extends from the first major face 2 to the second major face 3. Each one of the first and second transition areas 15a, 15b is preferably concave as seen in a cross-section of the cutting insert 1 taken along the first median plane MP1 and as seen in any plane that is parallel to the first median plane MP1 and extends across the transition areas 15a, 15b. Each one of the first, second, third and fourth side surfaces 14a-14d has a first lateral edge 16a, through which it adjoins to the adjacent corner side face 12a-12d and which extends in a straight line from the first major face 2 to the second major face 3 in parallel with the centre axis C of the through hole 5, and an opposite second lateral edge 16b, through which it adjoins to the adjacent transition area 15a, 15b and which extends in a straight line from the first major face 2 to the second major face 3 in parallel with said first lateral edge 16a.

The first side surface 14a is substantially flat and extends in a first plane P1 (see Fig 1c), the second side surface 14b is substantially flat and extends in a second plane P2, the third side surface 14c is substantially flat and extends in a third plane P3 and the fourth side surface 14d is substantially flat and extends in a fourth plane P4. The first and second side surfaces 14a, 14b are inclined towards each other at the same angle to the second median plane MP2, which implies that the angle formed between said first plane P1 and the second median plane MP2 is equal to the angle formed between said second plane P2 and the second median plane MP2. Furthermore, the first and second side surfaces 14a, 14b are inclined towards each other in such a manner that said first and second planes P1, P2 form an angle γ with each other that is larger than or equal to 90° and smaller than 180° (i.e. 90°≤ γ <180°). Also the third and fourth side surfaces 14c, 14d are inclined towards each other at the same angle to the second median plane MP2, which implies that the angle formed between said third plane P3 and the second median plane MP2 is equal to the angle formed between said fourth plane P4 and the second median plane MP2. Furthermore, the third and fourth side surfaces 14c, 14d are inclined towards each other in such a manner such that said third and fourth planes P3, P4 form an angle γ with each other that is equal to the angle γ that said first and second planes P1, P2 form with each other. Thus, the first lateral edge 16a of each one of the first, second, third and fourth side surfaces 14a-14d is located further away from the second median plane MP2 than the second lateral edge 16b of the same side surface, which implies that the perpendicular distance between the second median plane MP2 and the second lateral edge 16b of any of the first, second, third and fourth side surfaces 14a-14d is smaller than the perpendicular distance between the second median plane MP2 and the first lateral edge 16a of the same side surface. The angle γ that said first and second planes P1, P2 form with each other is with advantage larger than or equal to 140° and smaller than 180° (i.e. 140°≤ γ <180°), and preferably larger than or equal to 160° and smaller than 180° (i.e. 160°≤ γ< 180°). In the illustrated embodiment, said angle γ is 175.4°.

The first and second side surfaces 14a, 14b are preferably configured to jointly serve as radial abutment surfaces of the cutting insert 1 in four of the eighth possible working positions of the cutting insert, wherein the third and fourth side surfaces 14c, 14d are configured to jointly serve as radial abutment surfaces of the cutting insert 1 in the other four working positions of the cutting insert. However, the first, second, third and fourth side surfaces 14a-14d may as an alternative be configured to serve as radial abutment surfaces of the cutting insert 1 one at a time in different working positions of the cutting insert.

The third main side face 11c comprises a fifth side surface 14e and a sixth side surface 14f located on opposite sides of the second median plane MP2, wherein the fifth side surface extends from the first major face 2 to the second major face 3 and adjoins to the second corner side face 12b, and wherein the sixth side surface 14f extends from the first major face 2 to the second major face 3 and adjoins to the third corner side face 12c. In the corresponding manner, the fourth main side face 11d comprises a seventh side surface 14g and an eighth side surface 14h located on opposite sides of the second median plane MP2, wherein the seventh side surface 14g extends from the first major face 2 to the second major face 3 and adjoins to the fourth corner side face 12d, and wherein the eighth side surface 14h extends from the first major face 2 to the second major face 3 and adjoins to the first corner side face 12a. In the illustrated embodiment, the fifth and sixth side surfaces 14e, 14f are separated from each other by a first groove 17a provided on the third main side face 11c between the fifth side surface 14e and the sixth side surface 14f, and the seventh and eighth side surfaces 14g, 14h are separated from each other by a second groove 17b provided on the fourth main side face 11d between the seventh side surface 14g and the eighth side surface 14h, wherein each one of the first and second grooves 17a, 17b extends from the first major face 2 to the second major face 3.

In the illustrated embodiment, each one of the first and second grooves 17a, 17b has a substantially flat bottom surface 18 that is parallel to the third median plane MP3 and configured to serve as an axial abutment surface of the cutting insert 1 in four of said eight working positions of the cutting insert and abut against a corresponding axial support surface 38 in an insert seat 34, 34' in a tool body 31 when the cutting insert 1 is mounted in the insert seat in any of these four working positions. Thus, the bottom surface 18 of the first groove 17a is configured to serve as axial abutment surface of the cutting insert 1 in four of the eight working positions of the cutting insert, and the bottom surface 18 of the second groove 17b is configured to serve as axial abutment surface of the cutting insert 1 in the other four working positions of the cutting insert.

Each one of the fifth, sixth, seventh and eighth side surfaces 14e-14h is preferably substantially flat. However, each one of the fifth, sixth, seventh and eighth side surfaces 14e-14h may as an alternative be convexly curved with a radius of curvature of 30-1000 mm, preferably 50-500 mm, more preferably 50-300 mm, as seen in a cross-section of the cutting insert 1 taken along the first median plane MP1 and as seen in any plane that is parallel to the first median plane MP1 and extends across the side surface in question. Each one of the fifth, sixth, seventh and eighth side surfaces 14e-14h has a first lateral edge 19a, through which it adjoins to the adjacent corner side face 12a-12d and which extends in a straight line from the first major face 2 to the second major face 3 in parallel with the centre axis C of the through hole 5, and an opposite second lateral edge 19b, which extends in a straight line from the first major face 2 to the second major face 3 in parallel with said first lateral edge 19a. In the illustrated embodiment, each one of the fifth and sixth side surfaces 14e, 14f adjoins through its second lateral edge 19b to an adjacent surface 20 on the third main side face 11c that is convexly curved as seen in any plane that is parallel to the first median plane MP1, and each one of the seventh and eighth side surfaces 14g, 14h adjoins through its second lateral edge 19b to an adjacent surface 20 on the fourth main side face 11d that is convexly curved as seen in any plane that is parallel to the first median plane MP1. Each one of these convexly curved surfaces 20 on the third and fourth main side faces 11c, 11d preferably has a radius of curvature that is smaller than or equal to 10 mm, as seen in any plane that is parallel to the first median plane MP1. A suitable radius of curvature of these convexly curved surfaces 20 on the third and fourth main side faces 11c, 11d may as an alternative be defined in relation to a radius of curvature of the corner side faces 12a-12d. In the latter case, each one of the convexly curved surfaces 20 that adjoins to one of the fifth, sixth, seventh and eighth side surfaces through the second lateral edge 19b of the side surface in question preferably has a radius of curvature that is smaller than the radius of curvature of the adjacent corner side face 12a-12d to which the side surface in question adjoins through its first lateral edge 19a.

The second side surface 14b preferably has such an inclination in relation to the fifth side surface 14e that the above-mentioned second plane P2 forms an angle α of 87-93° with a fifth plane P5 (see Fig 1c) that contains the first and second lateral edges 19a, 19b of the fifth side surface 14e, wherein:
- the third side surface 14c has such an inclination in relation to the sixth side surface 14f that the above-mentioned third plane P3 forms an angle α with a sixth plane P6, which contains the first and second lateral edges 19a, 19b of the sixth side surface 14f, that is equal to the angle α that the second plane P2 forms with the fifth plane P5;
- the fourth side surface 14d has such an inclination in relation to the seventh side surface 14g that the above-mentioned fourth plane P4 forms an angle α with a seventh plane P7, which contains the first and second lateral edges 19a, 19b of the seventh side surface 14g, that is equal to the angle α that the second plane P2 forms with the fifth plane P5; and
- the first side surface 14a has such an inclination in relation to the eighth side surface 14h that the above-mentioned first plane P1 forms an angle α with an eighth plane P8, which contains the first and second lateral edges 19a, 19b of the eighth side surface 14h, that is equal to the angle α that the second plane P2 forms with the fifth plane P5.
In the illustrated embodiment, said angle α is 90.7°.

The fifth and sixth side surfaces 14e, 14f are preferably inclined away from each other at the same angle to the third median plane MP3 and in such a manner that the above-mentioned fifth and sixth planes P5, P6 form an angle β with each other that is smaller than 180°, wherein also the seventh and eighth side surfaces 14g, 14h are inclined away from each other at the same angle to the third median plane MP3 and is such a manner that the above-mentioned seventh and eighth planes P7, P8 form an angle β with each other that is equal to the angle β that the fifth and sixth planes P5, P6 form with each other. Thus, in this case, the angle formed between said fifth plane P5 and the third median plane MP3 is equal to the angle formed between said sixth plane P6 and the third median plane MP3, and the angle formed between said seventh plane P7 and the third median plane MP3 is equal to the angle formed between said eighth plane P8 and the third median plane MP3. In the illustrated embodiment, said angle β is 174°.

The cutting insert 1 comprises the following cutting edges:
- a first main cutting edge 21a formed at an intersection between the first side surface 14a and the first major face 2;
- a second main cutting edge 21b formed at an intersection between the second side surface 14b and the first major face 2;
- a third main cutting edge 21c formed at an intersection between the third side surface 14c and the first major face 2;
- a fourth main cutting edge 21d formed at an intersection between the fourth side surface 14d and the first major face 2;
- a fifth main cutting edge 21e formed at an intersection between the first side surface 14a and the second major face 3;
- a sixth main cutting edge 21f formed at an intersection between the second side surface 14b and the second major face 3;
- a seventh main cutting edge 21g formed at an intersection between the third side surface 14c and the second major face 3;
- an eighth main cutting edge 21h formed at an intersection between the fourth side surface 14d and the second major face 3;
- a first minor cutting edge 22a formed at an intersection between the eighth side surface 14h and the first major face 2,
- a second minor cutting edge 22b formed at an intersection between the fifth side surface 14e and the first major face 2;
- a third minor cutting edge 22c formed at an intersection between the sixth side surface 14f and the first major face 2;
- a fourth minor cutting edge 22d formed at an intersection between the seventh side surface 14g and the first major face 2;
- a fifth minor cutting edge 22e is formed at an intersection between the eighth side surface 14h and the second major face 3;
- a sixth minor cutting edge 22f formed at an intersection between the fifth side surface 14e and the second major face 3;
- a seventh minor cutting edge 22g formed at an intersection between the sixth side surface 14f and the second major face 3;
- an eighth minor cutting edge 22h formed at an intersection between the seventh side surface 14g and the second major face 3;
- a curved first corner cutting edge 23a formed at an intersection between the first corner side face 12a and the first major face 2;
- a curved second corner cutting edge 23b formed at an intersection between the second corner side face 12b and the first major face 2
- a curved third corner cutting edge 23c formed at an intersection between the third corner side face 12c and the first major face 2;
- a curved fourth corner cutting edge 23d formed at an intersection between the fourth corner side face 12d and the first major face 2;
- a curved fifth corner cutting edge 23e formed at an intersection between the first corner side face 12a and the second major face 3;
- a curved sixth corner cutting edge 23f formed at an intersection between the second corner side face 12b and the second major face 3;
- a curved seventh corner cutting edge 23g formed at an intersection between the third corner side face 12c and the second major face 3; and
- a curved eighth corner cutting edge 23h formed at an intersection between the fourth corner side face 12d and the second major face 3.

Each one of the main cutting edges 21a-21h preferably extends all along the side surface 14a-14d associated with the main cutting edge in question.

The first main cutting edge 21a, the first corner cutting edge 23a and the first minor cutting edge 22a form a first set of cutting edges and are located in series with each other with the first corner cutting edge 23a located between the first main cutting edge 21a and the first minor cutting edge 22a. The second main cutting edge 21b, the second corner cutting edge 23b and the second minor cutting edge 22b form a second set of cutting edges and are located in series with each other with the second corner cutting edge 23b located between the second main cutting edge 21b and the second minor cutting edge 22b. The third main cutting edge 21c, the third corner cutting edge 23c and the third minor cutting edge 22c form a third set of cutting edges and are located in series with each other with the third corner cutting edge 23c located between the third main cutting edge 21c and the third minor cutting edge 22c. The fourth main cutting edge 21d, the fourth corner cutting edge 23d and the fourth minor cutting edge 22d form a fourth set of cutting edges and are located in series with each other with the fourth corner cutting edge 23d located between the fourth main cutting edge 21d and the fourth minor cutting edge 22d. The fifth main cutting edge 21e, the fifth corner cutting edge 23e and the fifth minor cutting edge 22e form a fifth set of cutting edges and are located in series with each other with the fifth corner cutting edge 23e located between the fifth main cutting edge 21e and the fifth minor cutting edge 22e. The sixth main cutting edge 21f, the sixth corner cutting edge 23f and the sixth minor cutting edge 22f form a sixth set of cutting edges and are located in series with each other with the sixth corner cutting edge 23f located between the sixth main cutting edge 21f and the sixth minor cutting edge 22f. The seventh main cutting edge 21g, the seventh corner cutting edge 23a and the seventh minor cutting edge 22g form a seventh set of cutting edges and are located in series with each other with the seventh corner cutting edge 23g located between the seventh main cutting edge 21g and the seventh minor cutting edge 22g. The eighth main cutting edge 21h, the eighth corner cutting edge 23h and the eighth minor cutting edge 22h form an eighth set of cutting edges and are located in series with each other with the eighth corner cutting edge 23h located between the eighth main cutting edge 21h and the eighth minor cutting edge 22h. The first, second, third, fourth, fifth, sixth, seventh and eighth sets of cutting edges are configured to be in an active cutting position in a respective one of the eight working positions of the cutting insert 1. In the illustrated embodiment, the cutting edges 21a, 22a, 23a, 21c, 22c, 23c, 21f, 22f, 23f, 21h, 22h, 23h included in the first, third, sixth and eighth sets of cutting edges constitute right-hand cutting edges, which implies that the cutting edges of any of these four sets of cutting edges will be in active cutting position when the cutting insert 1 is mounted in a right-hand insert seat. Furthermore, in the illustrated embodiment, the cutting edges 21b, 22b, 23b, 21d, 22d, 23d, 21e, 22e, 23e, 21g, 22g, 23g included in the second, fourth, fifth and seventh sets of cutting edges constitute left-hand cutting edges, which implies that the cutting edges of any of these four sets of cutting edges will be in active cutting position when the cutting insert 1 is mounted in a left-hand insert seat.

Each one of the main cutting edges 21a-21h has a first end 25a that faces the adjacent corner cutting edge 23a-23h, and an opposite second end 25b that faces the third median plane MP3, wherein each one of the main cutting edges 21a-21h is inclined in relation to the first median plane MP1 such that its first end 25a is located further away from the first median plane MP1 than its second end 25b. Thus, the perpendicular distance between the first median plane MP1 and the second end 25b of each one of the main cutting edges 21a-21h is smaller than the perpendicular distance between the first median plane MP1 and the first end 25a of the same main cutting edge. Each one of the main cutting edges 21a-21h suitably has such an inclination in relation to the first median plane MP1 that an imaginary straight reference line RL (see Fig 1e) that extends between a first end point EP1 of the main cutting edge at the first end 25a thereof and a second end point EP2 of the main cutting edge at the second end 25b thereof forms an angle λ of 1-30°, preferably 5-15°, with the first median plane MP1. In the illustrated embodiment, said angle λ is 8°.

The first major face 2 comprises a first tangential abutment surface 7a that is configured to serve as a tangential abutment surface of the cutting insert 1 in four of the eight working positions of the cutting insert and abut against a corresponding tangential support surface 36 in an insert seat 34, 34' in a tool body 31 of a milling tool when the cutting insert 1 is mounted in the insert seat in any of these four working positions. The second major face 3 comprises a second tangential abutment surface 7b that is configured to serve as a tangential abutment surface of the cutting insert 1 in the other four working positions of the cutting insert and abut against a corresponding tangential support surface 36 in an insert seat 34, 34' in a tool body 31 of a milling tool when the cutting insert 1 is mounted in the insert seat in any of these four working positions. In the illustrated embodiment, the first tangential abutment surface 7a is flat, or at least substantially flat, and extends in a plane PL1 (see Fig 1g) that is parallel to the first median plane MP1, and the second tangential abutment surface 7b is also flat, or at least substantially flat, and extends in another plane PL2 that is parallel to the first median plane MP1. In the illustrated embodiment, the cutting edges 21a-21d, 22a-22d, 23a-23d included in the above-mentioned first, second, third and fourth sets of cutting edges are all located further away from the first median plane MP1 than the first tangential abutment surface 7a and are consequently located on a higher level than the first tangential abutment surface 7a when the cutting insert 1 is positioned with the first major face 2 facing upwards, wherein the cutting edges 21e-21h, 22e-22h, 23e-23h included in the above-mentioned fifth, sixth, seventh and eighth sets of cutting edges are all located further away from the first median plane MP1 than the second tangential abutment surface 7b and are consequently located on a higher level than the second tangential abutment surface 7b when the cutting insert 1 is positioned with the second major face 3 facing upwards.

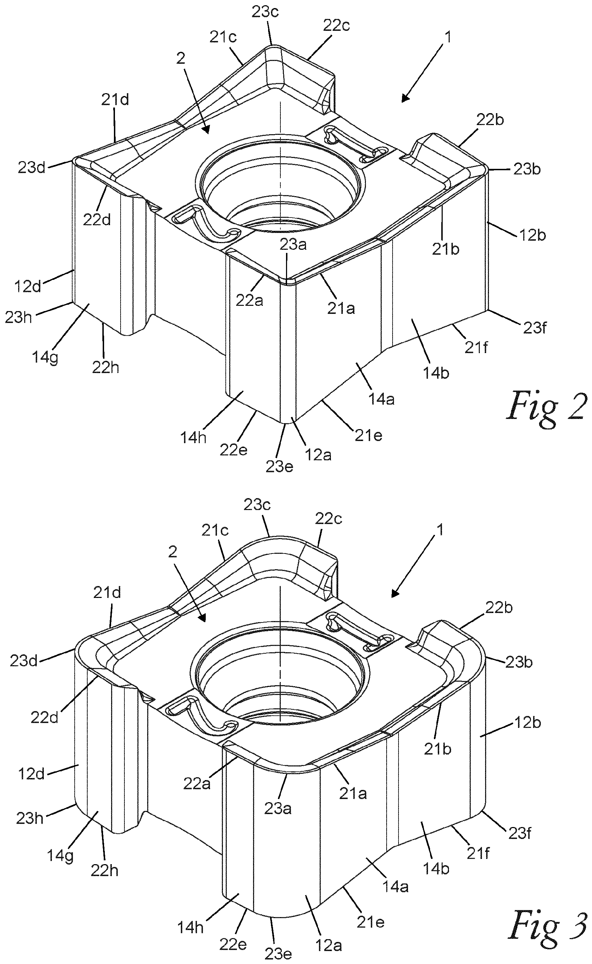

The cutting insert 1 according to the present invention may be designed with corner side faces 12a-12d having various radii of curvature. As illustrated in Fig 2, the cutting insert 1 may have corner side faces 12a-12d with a radius of curvature that is smaller than the radius of curvature of the corner side faces 12a-12d of the cutting insert illustrated in Figs 1a-1h. As illustrated in Fig 3, the cutting insert 1 may also have corner side faces 12a-12d with a radius of curvature that is larger than the radius of curvature of the corner side faces 12a-12d of the cutting insert illustrated in Figs 1a-1h. As to the rest, the cutting inserts 1 illustrated in Figs 2 and 3 have a design corresponding to the cutting insert 1 that has been described above with reference to Figs 1a-1h.

In the illustrated embodiments, the first major face 2 is provided with markings in the form of the numerals 1 and 2 and the second major face 3 is provided with markings in the form of the numerals 3 and 4. The markings facilitate an identification of the eighth different working positions of the cutting insert 1. Except for the markings, the first and second major faces 2, 3 are, within manufacturing tolerances, identical to each other. Furthermore, except for the markings, each one of the first and second major faces 2, 3 has 180° rotational symmetry about the centre axis C of the through hole 5. Furthermore, in the illustrated embodiments, the first and second major faces 2, 3 are, except for the markings, mirror symmetrical to each other with respect to the first median plane MP1.

Preferably, the cutting insert 1 is, except for the above-mentioned markings, mirror symmetrical with respect to at least one of the first, second and third medians planes MP1, MP2, MP3. More preferably, the cutting insert 1 is, except for the above-mentioned markings, mirror symmetrical with respect to any two of the first, second and third median planes MP1, MP2, MP3. Most preferably, the cutting insert 1 is, except for the above-mentioned markings, mirror symmetrical with respect to all three median planes MP1, MP2, MP3, as illustrated in Figs 1a-1h, 2 and 3.

Figs 4a-4f illustrate a milling tool 30 in the form of a half-side and front-face disc milling cutter with right-hand insert seats 34, Figs 6a-6e illustrate a milling tool 30' in the form of a half-side and front-face disc milling cutter with left-hand insert seats 34' and Figs 7a-7d illustrate a milling tool 30" in the form of a double half-side and face disc milling cutter with right-hand insert seats 34 as well as left-hand insert seats 34'. Each milling tool 30, 30', 30" comprises a tool body 31 and is configured to be rotated about an axis of rotation 32. The tool body 31 has a rear end 31a and an opposite front end 31b. A centre axis 33 of the tool body 31 extends between the rear end 31a and the front end 31b of the tool body, wherein this centre axis 33 coincides with the axis of rotation 32 of the milling tool 30, 30', 30". At the front end 31b, the tool body 31 is provided with a front face 31c. The tool body 31 also has a peripheral surface 31d. The tool body 31 is to be mounted to a rotating spindle or the similar of a milling machine, for instance via a tool holder. The tool body 31 is provided with insert seats 34, 34' configured to receive cutting inserts 1. A chip pocket 39 is provided in the tool body 31 in front of each insert seat 34, 34' as seen in the intended direction of rotation R of the tool body 31. The insert seats 34, 34' may, as illustrated in Figs 4a-4f, Figs 6a-6e and Figs 7a-7d, be formed directly in the tool body 31. However, each insert seat may as an alternative be formed in a separate cassette, which in its turn is releasably mounted to the tool body.

In the examples illustrated in Figs 4a-4f and Figs 6a-6e, the tool body 31 is provided with ten insert seats 34, 34', which are evenly distributed about the longitudinal axis 33 of the tool body and which are configured to receive a respective cutting insert 1. However, the tool body 31 may as an alternative, inter alia depending on the diameter of the tool body, be provided with any other suitable number of insert seats 34, 34'. Each insert seat 34, 34' of the milling tools 30, 30' illustrated in Figs 4a-4f and Figs 6a-6e is located at a transition between the front face 31c and the peripheral surface 31d of the tool body 31, wherein the insert seat 34, 34' is open towards the front face 31c of the tool body 31 in order to allow a cutting insert 1 mounted in the insert seat 34, 34' to project in the axial direction of the tool body 31 beyond the front face 31c thereof and also open towards the peripheral surface 31d of the tool body 31 in order to allow a cutting insert 1 mounted in the insert seat 34, 34' to project in the radial direction of the tool body 31 beyond the peripheral surface 31d thereof.

The milling tool 30" illustrated in Figs 7a-7d is provided with a first row of forwardly facing right-hand insert seats 34, each of which being located at a transition between the front face 31c and the peripheral surface 31d of the tool body 31, wherein each one of these insert seats 34 is open towards the front face 31c of the tool body 31 in order to allow a cutting insert 1 mounted in the insert seat 34 to project in the axial direction of the tool body 31 beyond the front face 31c thereof and also open towards the peripheral surface 31d of the tool body 31 in order to allow a cutting insert 1 mounted in the insert seat 34 to project in the radial direction of the tool body 31 beyond the peripheral surface 31d thereof. The milling tool 30" illustrated in Figs 7a-7d is also provided with a second row of rearwardly facing left-hand insert seats 34', each of which being located at a transition between a rear face 31e of the tool body 31 and the peripheral surface 31d thereof, wherein each one of these insert seats 34' is open towards the rear face 31e of the tool body 31 in order to allow a cutting insert 1 mounted in the insert seat 34' to project in the axial direction of the tool body 31 beyond the rear face 31e thereof and also open towards the peripheral surface 31d of the tool body 31 in order to allow a cutting insert 1 mounted in the insert seat 34' to project in the radial direction of the tool body 31 beyond the peripheral surface 31d thereof.

A cutting insert 1 is mounted in each one of the insert seats 34, 34' in the tool body 31. In the embodiments illustrated in Figs 4a-4f, Figs 6a-6e and Figs 7a-7d, the milling tool 30, 30', 30" is provided with cutting inserts 1 of the type illustrated in Figs 1a-1h. Each cutting insert 1 is configured to be releasably mounted to the associated insert seat 34, 34'. In the illustrated embodiments, each cutting insert 1 is fixed to the associated insert seat 34, 34' by means of a fastening element 6 in the form of a screw, which extends through the through hole 5 in the cutting insert 1 and is engaged in a threaded hole 35 (see Figs 4e, 6d, 7c and 7d) in a tangential support surface 36 in the insert seat. The insert seat 34, 34' is also provided with two radial support surfaces 37a, 37b and an axial support surface 38. Since each cutting insert 1 has a negative shape, each insert seat 34, 34' is so designed that the cutting insert 1 is given a negative axial tipping-in angle and a negative radial tipping-in angle when mounted in the insert seat 34, 34' in any of its working positions.

Each cutting insert 1 is mountable in four different working positions in any of the right-hand insert seats 34 of the milling tools 30, 30" illustrated in Figs 4a-4f and Figs 7a-7d and in four other different working positions in any of the left-hand insert seats 34' of the milling tools 30', 30" illustrated in Figs 6a-6e and Figs 7a-7d. In each one of the different working positions of the cutting insert 1:
- the tangential abutment surface 7a, 7b on the major face 2, 3 presently constituting the trailing face of the cutting insert 1 is configured to abut against the tangential support surface 36 in the associated insert seat 34, 34',
- the bottom surface 18 of the groove 17a, 17b on one of the third and fourth main side faces 11c, 11d is configured to serve as axial abutment surface of the cutting insert 1 and abut against the axial support surface 38 in the associated insert seat 34, 34', and
- the two side surfaces (14a and 14b, or 14c and 14d) on one of the first and second main side faces 11a, 11b are configured to jointly serve as radial abutment surfaces of the cutting insert 1 and abut against a respective one of the radial support surfaces 37a, 37b in the associated insert seat 34, 34'.

Fig 4f shows a cutting insert 1 of the type illustrated in Figs 1a-1h mounted in an insert seat 34 of the milling tool 30 in one of its eight working positions, i.e. in a right-hand insert seat. Fig 6e shows a cutting insert 1 of the type illustrated in Figs 1a-1h mounted in an insert seat 34' of the milling tool 30' in one of its eight working positions, i.e. in a left-hand insert seat. It can be seen in Figs 4f and 6e that the entering angle Kᵣ is very close to 90° with a cutting insert 1 of the type illustrated in Figs 1a-1h.

A half-side and front-face disc milling cutter 30 of the type illustrated in Figs 4a-4h with right-hand insert seats 34 and a half-side and front-face disc milling cutter 30' of the type illustrated in Figs 6a-6e with left-hand insert seats 34' may be combined with each other and mounted on the same arbor 40, as schematically illustrated in Fig 5, in order to perform straddle milling.

The cutting inserts 1 are made of hard and wear-resistant material, preferably cemented carbide, and the tool body 31 is preferably made of steel.

The invention is of course not in any way restricted to the embodiments described above. On the contrary, many possibilities to modifications thereof will be apparent to a person with ordinary skill in the art without departing from the basic idea of the invention such as defined in the appended claims.

## Claims

1. A double-sided negative cutting insert for use in milling, the cutting insert (1) being turnable into eight different working positions and comprising:
- a first major face (2) and a second major face (3) arranged opposite to each other on opposite sides of the cutting insert (1), the first and second major faces (2, 3) being configured to serve as rake faces, one at a time, and to constitute leading and trailing faces of the cutting insert (1) when mounted in an insert seat (34, 34') of a tool body (31) and as seen in an intended direction of rotation (R) of the tool body (31), wherein the cutting insert (1) has a through hole (5) that extends centrally through the cutting insert (1) between the first and second major faces (2, 3) and a first median plane (MP1) that extends halfway between the first and second major faces (2, 3) perpendicularly to a centre axis (C) of the through hole (5);
- a peripheral surface (10) extending around the cutting insert (1) between the first and second major faces (2, 3) and comprising:
• a first main side face (11a) and a second main side face (11b) arranged opposite to each other on opposite sides of the cutting insert (1), wherein the cutting insert (1) has a second median plane (MP2) that extends halfway between the first and second main side faces (11a, 11b) and contains the centre axis (C) of the through hole (5),
• a third main side face (11c) and a fourth main side face (11d) arranged opposite to each other on two other opposite sides of the cutting insert (1), wherein the cutting insert (1) has a third median plane (MP3) that extends halfway between the third and fourth main side faces (11c, 11d) and contains the centre axis (C) of the through hole (5),
• a first corner side face (12a) arranged between the first and fourth main side faces (11a, 11d),
• a second corner side face (12b) arranged between the first and third main side faces (11a, 11c),
• a third corner side face (12c) arranged between the second and third main side faces (11b, 11c), and
• a fourth corner side face (12d) arranged between the second and fourth main side faces (11b, 11d);
- a curved first corner cutting edge (23a) formed at an intersection between the first corner side face (12a) and the first major face (2);
- a curved second corner cutting edge (23b) formed at an intersection between the second corner side face (12b) and the first major face (2);
- a curved third corner cutting edge (23c) formed at an intersection between the third corner side face (12c) and the first major face (2);
- a curved fourth corner cutting edge (23d) formed at an intersection between the fourth corner side face (12d) and the first major face (2);
- a curved fifth corner cutting edge (23e) formed at an intersection between the first corner side face (12a) and the second major face (3);
- a curved sixth corner cutting edge (23f) formed at an intersection between the second corner side face (12b) and the second major face (3);
- a curved seventh corner cutting edge (23g) formed at an intersection between the third corner side face (12c) and the second major face (3); and
- a curved eighth corner cutting edge (23h) formed at an intersection between the fourth corner side face (12d) and the second major face (3),
**characterized in:**
- **that** the first main side face (11a) comprises a first side surface (14a) and a second side surface (14b) located on opposite sides of the third median plane (MP3), the first side surface (14a) extending between the first and second major faces (2, 3) and adjoining to the first corner side face (12a), and the second side surface (14b) extending between the first and second major faces (2, 3) and adjoining to the second corner side face (12b);
- **that** the second main side face (11b) comprises a third side surface (14c) and a fourth side surface (14d) located on opposite sides of the third median plane (MP3), the third side surface (14c) extending between the first and second major faces (2, 3) and adjoining to the third corner side face (12c), and the fourth side surface (14d) extending between the first and second major faces (2, 3) and adjoining to the fourth corner side face (12d);
- **that** the third main side face (11c) comprises a fifth side surface (14e) and a sixth side surface (14f) located on opposite sides of the second median plane (MP2), the fifth side surface (14e) extending between the first and second major faces (2, 3) and adjoining to the second corner side face (12b), and the sixth side surface (14f) extending between the first and second major faces (2, 3) and adjoining to the third corner side face (12c);
- **that** the fourth main side face (11c) comprises a seventh side surface (14g) and an eighth side surface (14h) located on opposite sides of the second median plane (MP2), the seventh side surface (14g) extending between the first and second major faces (2, 3) and adjoining to the fourth corner side face (12d), and the eighth side surface (14h) extending between the first and second major faces (2, 3) and adjoining to the first corner side face (12a);
- **that** a first main cutting edge (21a) is formed at an intersection between the first side surface (14a) and the first major face (2), a second main cutting edge (21b) is formed at an intersection between the second side surface (14b) and the first major face (2), a third main cutting edge (21c) is formed at an intersection between the third side surface (14c) and the first major face (2), a fourth main cutting edge (21d) is formed at an intersection between the fourth side surface (14d) and the first major face (2), a fifth main cutting edge (21e) is formed at an intersection between the first side surface (14a) and the second major face (3), a sixth main cutting edge (21f) is formed at an intersection between the second side surface (14b) and the second major face (3), a seventh main cutting edge (21g) is formed at an intersection between the third side surface (14c) and the second major face (3) and an eighth main cutting edge (21h) is formed at an intersection between the fourth side surface (14d) and the second major face (3);
- **that** a first minor cutting edge (22a) is formed at an intersection between the eighth side surface (14h) and the first major face (2), wherein the first minor cutting edge (22a), the first corner cutting edge (23a) and the first main cutting edge (21a) are located in series with each other with the first corner cutting edge (23a) located between the first main cutting edge (21a) and the first minor cutting edge (22a);
- **that** a second minor cutting edge (22b) is formed at an intersection between the fifth side surface (14e) and the first major face (2), wherein the second minor cutting edge (22b), the second corner cutting edge (23b) and the second main cutting edge (21b) are located in series with each other with the second corner cutting edge (23b) located between the second main cutting edge (21b) and the second minor cutting edge (22b);
- **that** a third minor cutting edge (22c) is formed at an intersection between the sixth side surface (14f) and the first major face (2), wherein the third minor cutting edge (22c), the third corner cutting edge (23c) and the third main cutting edge (21c) are located in series with each other with the third corner cutting edge (23c) located between the third main cutting edge (21c) and the third minor cutting edge (22c);
- **that** a fourth minor cutting edge (22d) is formed at an intersection between the seventh side surface (14g) and the first major face (2), wherein the fourth minor cutting edge (22d), the fourth corner cutting edge (23d) and the fourth main cutting edge (21d) are located in series with each other with the fourth corner cutting edge (23d) located between the fourth main cutting edge (21d) and the fourth minor cutting edge (22d);
- **that** a fifth minor cutting edge (22e) is formed at an intersection between the eighth side surface (14h) and the second major face (3), wherein the fifth minor cutting edge (22e), the fifth corner cutting edge (23e) and the fifth main cutting edge (21e) are located in series with each other with the fifth corner cutting edge (23e) located between the fifth main cutting edge (21e) and the fifth minor cutting edge (22e);
- **that** a sixth minor cutting edge (22f) is formed at an intersection between the fifth side surface (14f) and the second major face (3), wherein the sixth minor cutting edge (22f), the sixth corner cutting edge (23f) and the sixth main cutting edge (21f) are located in series with each other with the sixth corner cutting edge (23f) located between the sixth main cutting edge (21f) and the sixth minor cutting edge (22f);
- **that** a seventh minor cutting edge (22g) is formed at an intersection between the sixth side surface (14f) and the second major face (3), wherein the seventh minor cutting edge (22g), the seventh corner cutting edge (23g) and the seventh main cutting edge (21g) are located in series with each other with the seventh corner cutting edge (23g) located between the seventh main cutting edge (21g) and the seventh minor cutting edge (22g);
- **that** an eighth minor cutting edge (22h) is formed at an intersection between the seventh side surface (14g) and the second major face (3), wherein the eighth minor cutting edge (22h), the eighth corner cutting edge (23h) and the eighth main cutting edge (21h) are located in series with each other with the eighth corner cutting edge (23h) located between the eighth main cutting edge (21h) and the eighth minor cutting edge (22h);
- **that** each one of said main cutting edges (21a-21h) has a first end (25a) facing the adjacent corner cutting edge (23a-23h) and an opposite second end (25b) facing the third median plane (MP3), wherein each one of said main cutting edges (21a-21h) is inclined in relation to the first median plane (MP1) such that its first end (25a) is located further away from the first median plane (MP1) than its second end (25b);
- **that** the first side surface (14a) is substantially flat and extends in a first plane (P1) and the second side surface (14b) is substantially flat and extends in a second plane (P2), wherein the first and second side surfaces (14a, 14b) are inclined towards each other at the same angle to the second median plane (MP2) and such that said first and second planes (P1, P2) form an angle (γ) with each other that is larger than or equal to 90° and smaller than 180°; and
- **that** the third side surface (14c) is substantially flat and extends in a third plane (P3) and the fourth side surface (14d) is substantially flat and extends in a fourth plane (P4), wherein the third and fourth side surfaces (14c, 14d) are inclined towards each other at the same angle to the second median plane (MP2) and such that said third and fourth planes (P3, P4) form an angle (γ) with each other that is equal to the angle (γ) that said first and second planes (P1, P2) form with each other.

2. A double-sided negative cutting insert according to claim 1, **characterized in that** each main cutting edge of said first, second, third, fourth, fifth, sixth, seventh and eighth main cutting edges (21a-21h) has such an inclination in relation to the first median plane (MP1) that an imaginary straight reference line (RL) that extends between a first end point (EP1) of the main cutting edge at the first end (25a) thereof and a second end point (EP2) of the main cutting edge at the second end (25b) thereof forms an angle (λ) of 1-30°, preferably 5-15°, with the first median plane (MP1).

3. A double-sided negative cutting insert according to claim 1 or 2, **characterized in:**
- **that** the first and second main cutting edges (21a, 21b) are mirror symmetrical to each other with respect to the third median plane (MP3);
- **that** the third and fourth main cutting edges (21c, 21d) are mirror symmetrical to each other with respect to the third median plane (MP3);
- **that** the fifth and sixth main cutting edges (21e, 21f) are mirror symmetrical to each other with respect to the third median plane (MP3); and
- **that** the seventh and eighth main cutting edges (21g, 21h) are mirror symmetrical to each other with respect to the third median plane (MP3).

4. A double-sided negative cutting insert according to any of claims 1-3, **characterized in that** the angle (γ) that said first and second planes (P1, P2) form with each other is larger than or equal to 140° and smaller than 180°, preferably larger than or equal to 160° and smaller than 180°.

5. A double-sided negative cutting insert according to any of claims 1-4, **characterized in:**
- **that** each side surface of said fifth, sixth, seventh and eighth side surfaces (14e-14h) is substantially flat or is convexly curved as seen in any plane that is parallel to the first median plane (MP1) and extends across the side surface in question;
- **that** the fifth side surface (14e) has a first lateral edge (19a), through which the fifth side surface (14e) adjoins to the second corner side face (12b) and which extends in a straight line from the first major face (2) to the second major face (3) in parallel with the centre axis (C) of the through hole (5), and an opposite second lateral edge (19b) that is parallel to said first lateral edge (19a) and extends in a straight line from the first major face (2) to the second major face (3);
- **that** the sixth side surface (14f) has a first lateral edge (19a), through which the sixth side surface (14f) adjoins to the third corner side face (12c) and which extends in a straight line from the first major face (2) to the second major face (3) in parallel with the centre axis (C) of the through hole (5), and an opposite second lateral edge (19b) that is parallel to said first lateral edge (19a) and extends in a straight line from the first major face (2) to the second major face (3);
- **that** the seventh side surface (14g) has a first lateral edge (19a), through which the seventh side surface (14g) adjoins to the fourth corner side face (12d) and which extends in a straight line from the first major face (2) to the second major face (3) in parallel with the centre axis (C) of the through hole (5), and an opposite second lateral edge (19b) that is parallel to said first lateral edge (19a) and extends in a straight line from the first major face (2) to the second major face (3); and
- **that** the eighth side surface (14h) has a first lateral edge (19a), through which the eighth side surface (14h) adjoins to the first corner side face (12a) and which extends in a straight line from the first major face (2) to the second major face (3) in parallel with the centre axis (C) of the through hole (5), and an opposite second lateral edge (19b) that is parallel to said first lateral edge (19a) and extends in a straight line from the first major face (2) to the second major face (3).

6. A double-sided negative cutting insert according to claim 5, **characterized in that** each side surface of said fifth, sixth, seventh and eighth side surfaces (14e-14h) is convexly curved with a radius of curvature of 30-1000 mm, preferably 50-500 mm, more preferably 50-300 mm, as seen in any plane that is parallel to the first median plane (MP1) and extends across the side surface in question.

7. A double-sided negative cutting insert according to claim 5 or 6, **characterized in:**
- **that** the second side surface (14b) has such an inclination in relation to the fifth side surface (14e) that said second plane (P2) forms an angle (α) of 87-93° with a fifth plane (P5) that contains the first and second lateral edges (19a, 19b) of the fifth side surface (14e);
- **that** the third side surface (14c) has such an inclination in relation to the sixth side surface (14f) that said third plane (P3) forms an angle (α) with a sixth plane (P6), which contains the first and second lateral edges (19a, 19b) of the sixth side surface (14f), that is equal to the angle (α) that said second plane (P2) forms with said fifth plane (P5);
- **that** the fourth side surface (14d) has such an inclination in relation to the seventh side surface (14g) that said fourth plane (P4) forms an angle (α) with a seventh plane (P7), which contains the first and second lateral edges (19a, 19b) of the seventh side surface (14g), that is equal to the angle (α) that said second plane (P2) forms with said fifth plane (P5); and
- **that** the first side surface (14a) has such an inclination in relation to the eighth side surface (14h) that said first plane (P1) forms an angle (α) with an eighth plane (P8), which contains the first and second lateral edges (19a, 19b) of the eighth side surface (14h), that is equal to the angle (α) that said second plane (P2) forms with said fifth plane (P5).

8. A double-sided negative cutting insert according to claim 7, **characterized in:**
- **that** the fifth and sixth side surfaces (14e, 14f) are inclined away from each other at the same angle to the third median plane (MP3) and such that said fifth and sixth planes (P5, P6) form an angle (β) with each other that is smaller than 180°; and
- **that** the seventh and eighth side surfaces (14g, 14h) are inclined away from each other at the same angle to the third median plane (MP3) and such that said seventh and eighth planes (P7, P8) form an angle (β) with each other that is equal to the angle (β) that said fifth and sixth planes (P5, P6) form with each other.

9. A double-sided cutting insert according to any of claims 1-8, **characterized in that** each one of the first and second main side faces (11a, 11b) has 180° rotational symmetry about a first imaginary reference axis (A1) that extends along a line of intersection between the first median plane (MP1) and the third median plane (MP3).

10. A double-sided cutting insert according to any of claims 1-9, **characterized in that** each one of the third and fourth main side faces (11c, 11d) has 180° rotational symmetry about a second imaginary reference axis (A2) that extends along a line of intersection between the first median plane (MP1) and the second median plane (MP2).

11. A double-sided cutting insert according to any of claims 1-10, **characterized in that** each one of the first and second major faces (2, 3) has 180° rotational symmetry about the centre axis (C) of the through hole (5).

12. A double-sided cutting insert according to any of claims 1-11, **characterized in that** the first and second major faces (2, 3) are mirror symmetrical to each other with respect to the first median plane (MP1).

13. A double-sided cutting insert according to any of claims 1-12, **characterized in:**
- **that** the first major face (2) comprises a substantially flat first tangential abutment surface (7a), wherein the first, second, third and fourth corner cutting edges (23a-23d) are all located further from the first median plane (MP1) than the first tangential abutment surface (7a); and
- **that** the second major face (3) comprises a substantially flat second tangential abutment surface (7b), wherein the fifth, sixth, seventh and eighth corner cutting edges (23e-23h) are all located further from the first median plane (MP1) than the second tangential abutment surface (7b).

14. A double-sided cutting insert according to claim 13, **characterized in:**
- **that** also the first, second, third and fourth main cutting edges (21a-21d) and the first, second, third and fourth minor cutting edges (22a-22d) are all located further from the first median plane (MP1) than the first tangential abutment surface (7a); and
- **that** also the fifth, sixth, seventh and eighth main cutting edges (21e-21h) and the fifth, sixth, seventh and eighth minor cutting edges (22e-22h) are all located further from the first median plane (MP1) than the second tangential abutment surface (7b).

15. A double-sided cutting insert according to any of claims 1-14, **characterized in:**
- **that** the fifth and sixth side surfaces (14e, 14f) are separated from each other by a first groove (17a) provided on the third main side face (11c) between the fifth side surface (14e) and the sixth side surface (14f), wherein this first groove (17a) extends from the first major face (2) to the second major face (3); and
- **that** the seventh and eighth side surfaces (14g, 14h) are separated from each other by a second groove (17b) provided on the fourth main side face (11d) between the seventh side surface (14g) and the eighth side surface (14h), wherein this second groove (17b) extends from the first major face (2) to the second major face (3).

16. A double-sided negative cutting insert according to claim 15, **characterized in that** each one of the first and second grooves (17a, 17b) has a substantially flat bottom surface (18) that is parallel to the third median plane (MP3) and configured to serve as an axial abutment surface of the cutting insert (1) in four of said eight working positions of the cutting insert and abut against a corresponding axial support surface (38) in an insert seat (34, 34') in a tool body (31) when the cutting insert (1) is mounted in the insert seat in any of these four working positions.

17. A double-sided cutting insert according to any of claims 1-16, **characterized in:**
- **that** the first and second side surfaces (14a, 14b) are separated from each other by a first transition area (15a) on the first main side face (11a), wherein this first transition area (15a) extends between the first and second major faces (2, 3); and
- **that** the third and fourth side surfaces (14c, 14d) are separated from each other by a second transition area (15b) on the second main side face (11b), wherein this second transition area (15b) extends between the first and second major faces (2, 3).

18. A milling tool comprising at least one double-sided negative cutting insert (1) according to any of claims 1-17.

19. A milling tool according to claim 18, wherein the milling tool (30, 30', 30") is a half-side and back-face disc milling cutter, a half-side and front-face disc milling cutter or a double half-side and face disc milling cutter.
